# EUROPEAN PATENT APPLICATION

(11) **EP 4 202 411 A1**
(43) Date of publication of application: **28.06.2023**
(21) Application number: 22216756.1
(22) Date of filing: 27.12.2022
(51) Int. Cl.: G01N 21/27, G01N 21/75

(54) **MEASUREMENT DEVICE WITH LIGHT QUANTITY CORRECTION FUNCTION AND LIGHT QUANTITY CORRECTION METHOD THEREOF**

(30) Priority: 27.12.2021 KR 20210187973
(71) Applicant: OSANG HEALTHCARE CO., LTD., Anyang-si, Gyeonggi-do 14040 (KR)
(72) Inventor: Lee, Jong Jin, 07064 Seoul (KR); Ryu, Myung Seok, 10077 Gimpo-si, Gyeonggi-do (KR)
(74) Representative: Grünecker Patent- und Rechtsanwälte PartG mbB

(57) **Abstract**

The present invention relates to a measurement device with a light quantity correction function, which is a measurement device into which a cartridge is inserted and which measures an analyte of a sample on the basis of optical reaction characteristic information about the sample in the cartridge, includes a light-emitting unit configured to emit light, a first light-receiving unit configured to receive light according to a reaction of the light emitted by the light-emitting unit with respect to the sample, a second light-receiving unit and a third light-receiving unit disposed to receive the light emitted by the light-emitting unit even when the cartridge is not inserted, and a control unit configured to, when a light quantity correction function is performed, control the light-emitting unit to emit light, and perform the light quantity correction function by comparing a detection value detected by each of the second light-receiving unit and the third light-receiving unit with a pre-stored reference value.

## Description

### BACKGROUND

### 1. Field of the Invention

The present invention relates to a measurement device with a light quantity correction function and a light quantity correction method thereof, and more particularly, to a measurement device that optically measures information about a sample in a cartridge inserted into a measurement unit of the measurement device.

### 2. Discussion of Related Art

In relation to medical measurement devices, a method of expressing a color using an enzyme, a color reagent, or the like and measuring the density of the color using an optical element in order to quantify a desired biomarker in blood or body fluid is known.

In this case, a method of inserting a medium device (hereinafter referred to as a "cartridge") into which a sample has been injected or is to be injected into a measurement unit of the measurement device in order to provide a sample (including a reacted sample) to a measurement device and measuring an analyte of the sample on the basis of characteristic information of a reaction including at least one of reflection, absorption, and transmission of light emitted from a light source with respect to the sample injected into the cartridge is used.

For example, in the glycated hemoglobin (HbA1c) measurement technique capable of measuring blood sugar in relation to diabetes, a boronate affinity method or the like is a method mainly using reflection of light using the cartridge method described above, whereas a liquid chromatography method (usually ion exchange high-speed liquid chromatography) or the like is a method using a separation technique based on a potential difference between glycated hemoglobin and other pieces of hemoglobin, and thus a method using a tube is used instead of using a cartridge method.

In such a measurement device using a light-emitting element, it is necessary to always maintain constant luminous intensity (quantity of light) of light emitted from the light-emitting element. When the luminous intensity is not constant, a distorted value may be calculated in a quantification operation of a detected analyte, which is a serious problem that may lead to a decrease in reliability of a medical measurement device and loss of function of the medical device. Therefore, it is necessary to always maintain constant luminous intensity of light emitted from the light-emitting element.

However, in the case of using the above-described cartridge method, light emitted from a light-emitting element is reflected, absorbed, or transmitted through a cartridge inserted into a measurement unit (a sample injected into the cartridge), and then is measured by a light-receiving element. That is, a path or the like of the light emitted from the light-emitting element may be changed by the cartridge, and thus, in order to check the quantity of the light emitted from the light-emitting element, a separate cartridge (hereinafter referred to as a "check cartridge") for light quantity inspection should be inserted into the measurement unit, and the quantity of light should be detected by the light-receiving element.

In the case of using such a separate check cartridge, special storage or management is required to protect the check cartridge from contamination or scratches and user intervention is required to use the check cartridge in the measurement device, and thus there is a possibility of unintentional errors occurring when measuring the luminous intensity due to the user's incorrect usage method (insertion of the check cartridge into an abnormal position or secondary contamination by the user during insertion, etc.).

Further when the cartridge is inserted into the measurement device for measurement, the measurement unit has a structure in which it is opened by opening a cover of the measurement device, and thus contamination of the light-emitting element or the light-receiving element may occur due to inflow of foreign substances or leakage of reagents or blood in the open state.

In addition, the related art has a problem in that, even when only one of the light-emitting element and the light-receiving element is contaminated or a change occurs in the characteristics of an individual element, a result such as a change in luminous intensity appears and cannot be checked or corrected.

Meanwhile, the related art of the present invention is disclosed in Korean Laid-open Patent Application No. 10-2012-0114750 (published on October 17, 2012).

### SUMMARY OF THE INVENTION

The present invention is directed to solving the problems of the conventional measurement device described above, and to providing a measurement device with a light quantity correction function, which is capable of providing a light quantity correction function without using a check cartridge, and a light quantity correction method thereof.

According to an aspect of the present invention, there is provided a measurement device with a light quantity correction function, which is a measurement device into which a cartridge is inserted and which measures an analyte of a sample on the basis of optical reaction characteristic information about the sample in the cartridge, including a light-emitting unit configured to emit light, a first light-receiving unit configured to receive light according to a reaction of the light emitted by the light-emitting unit with respect to the sample, a second light-receiving unit and a third light-receiving unit disposed to receive the light emitted by the light-emitting unit even when the cartridge is not inserted, and a control unit configured to, when a light quantity correction function is performed, control the light-emitting unit to emit light and perform the light quantity correction function by comparing a detection value detected by each of the second light-receiving unit and the third light-receiving unit with a pre-stored reference value.

The second light-receiving unit and the third light-receiving unit may be disposed on a surface facing a surface on which the light-emitting unit is disposed.

The light-emitting unit and the first light-receiving unit may be disposed to be coplanar.

When the detection value detected by each of the second light-receiving unit and the third light-receiving unit is less than or equal to a threshold value for the reference value, the control unit may determine that there is no problem and terminate the light quantity correction process.

When a change in the detection value by a threshold value or more compared to the reference value is detected by at least one of the second light-receiving unit and the third light-receiving unit and a rate of change in the detection value detected by the second light-receiving unit compared to the reference value is different from a rate of change in the detection value detected by the third light-receiving unit compared to the reference value, the control unit may determine that an error has occurred and terminate the light quantity correction process.

When a change in the detection value by a threshold value or more compared to the reference value is detected by both the second light-receiving unit and the third light-receiving unit and a rate of change in the detection value detected by the second light-receiving unit compared to the reference value is the same as a rate of change in the detection value detected by the third light-receiving unit compared to the reference value, the control unit may perform light quantity correction by controlling the light-emitting unit.

The reference value and the threshold value for the reference value may be set separately for each of the second light-receiving unit and the third light-receiving unit.

The light-emitting unit may include a light-emitting diode, and the first light-receiving unit, the second light-receiving unit and the third light-receiving unit may include a photodiode.

According to another aspect of the present invention, there is provided a light quantity correction method of a measurement device, including operations of controlling, by a control unit, a light-emitting unit to emit light, comparing, by the control unit, a detection value detected by each of at least two light-receiving units with a pre-stored reference value, and performing, by the control unit, one operation among normal determination, error determination, and light quantity correction function performance according to a result of the comparing.

In the performing of one of the operations, when the detection value detected by each of the at least two light-receiving units is less than or equal to a threshold value for the reference value, the control unit may determine that there is no problem.

In the performing of one of the operations, when a change in the detection value by a threshold value or more compared to the reference value is detected by at least one of the at least two light-receiving units and a rate of change in the detection value detected by one of the at least two light-receiving units compared to the reference value is different from a rate of change in the detection value detected by the other of the at least two light-receiving units compared to the reference value, the control unit may determine that an error has occurred.

In the performing of one of the operations, when a change in the detection value by a threshold value or more compared to the reference value is detected by both of the at least two light-receiving units and a rate of change in the detection value detected by one of the at least two light-receiving units compared to the reference value is the same as a rate of change in the detection value detected by the other of the at least two light-receiving units compared to the reference value, the control unit may perform light quantity correction by controlling the light-emitting unit.

The reference value and the threshold value for the reference value may be set separately for each of the at least two light-receiving units.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG 1 is a block diagram for describing a configuration of a measurement device with a light quantity correction function according to an embodiment of the present invention;
FIG 2 is an exemplary diagram for describing a configuration of a measurement unit of a measurement device with a light quantity correction function according to an embodiment of the present invention; and
FIG 3 is a flowchart for describing a light quantity correction method of a measurement device according to an embodiment of the present invention.

### DETAILED DESCRIPTION OF EXEMPLARY EMBODIMENTS

Hereinafter, embodiments of a measurement device with a light quantity correction function and a light quantity correction method thereof according to the present invention will be described with reference the accompanying drawings. In this process, thicknesses of lines, sizes of components, and the like illustrated in the drawings may be exaggerated for clarity and convenience of description. Further, some terms which will be described below are defined in consideration of functions in the present invention and meanings may vary depending on, for example, a user or operator's intentions or customs. Therefore, the meanings of these terms should be interpreted based on the scope throughout this specification.

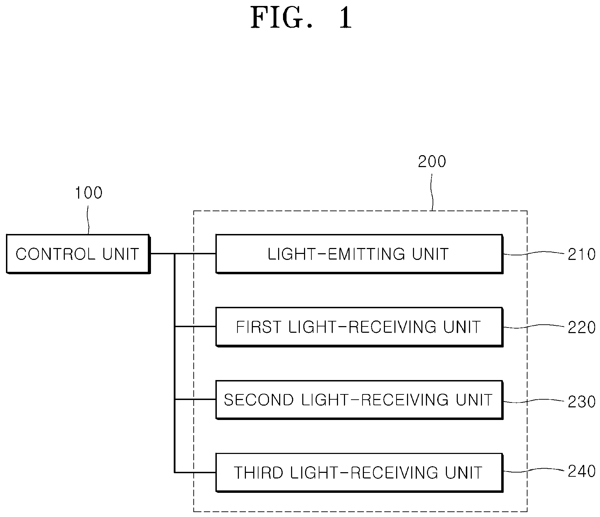

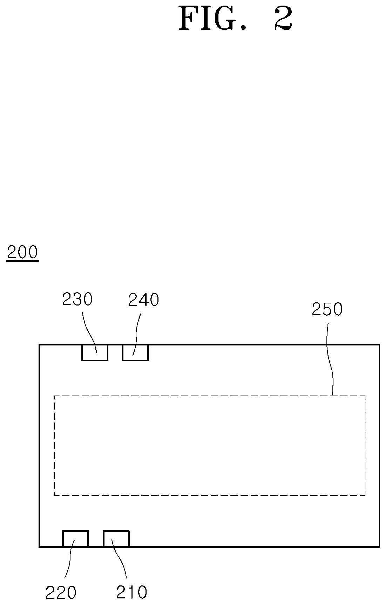

FIG 1 is a block diagram for describing a configuration of a measurement device with a light quantity correction function according to an embodiment of the present invention, and FIG 2 is an exemplary diagram for describing a configuration of a measurement unit of the measurement device with the light quantity correction function according to the embodiment of the present invention. The measurement device with the light quantity correction function according to the embodiment of the present invention will be described below with reference to FIGS. 1 and 2.

As illustrated in FIG 1, the measurement device with the light quantity correction function according to the embodiment of the present invention includes a control unit 100 and a measurement unit 200.

The control unit 100 may perform functions such as controlling a light-emitting unit 210 and light-receiving units 220, 230, and 240 of the measurement unit 200 and receiving and processing signals detected by the light-receiving units 220, 230, and 240, and in addition, may be configured to control a function of the entire measurement device.

The measurement unit 200 may include the light-emitting unit 210 and the light-receiving units 220, 230, and 240. In the present embodiment, the light-emitting unit 210 may be configured as a light-emitting diode, and each of the light-receiving units 220, 230, and 240 may include photodiodes.

The light-emitting unit 210 may emit light for measuring an analyte of a sample on the basis of optical reaction characteristic information about the sample (reacted sample) injected into a cartridge 250 inserted into the measurement unit 200.

A first light-receiving unit 220 may receive light caused by a reaction including at least one of reflection, absorption, and transmission of the light emitted from the light-emitting unit 210 with respect to the sample injected into the inserted cartridge 250.

In some embodiments, the light-emitting unit 210 and the first light-receiving unit 220 may be disposed on the same surface of the measurement unit 200 as illustrated in FIG 2, and in this case, the first light-receiving unit 220 may be configured to measure the light reflected by the sample and the cartridge.

Meanwhile, since the remaining components of the measurement device except for a second light-receiving unit 230, a third light-receiving unit 240, and a light quantity correction function of the control unit 100, which will be described below, may be configured in the same way as components of a general measurement device, a more detailed description thereof will be omitted.

The second light-receiving unit 230 and the third light-receiving unit 240 may be disposed to receive the light emitted by the light-emitting unit 210 even when the cartridge 250 is not inserted into the measurement unit 200. Preferably, it is configured so that there is no interfering structure on light paths from the second light-receiving unit 230 and the third light-receiving unit 240 to the light-emitting unit 210, and thus the second light-receiving unit 230 and the third light-receiving unit 240 may be configured to directly receive (i.e., without going through reflection or the like) the light emitted from the light-emitting unit 210. For example, as illustrated in FIG 2, the second light-receiving unit 230 and the third light-receiving unit 240 may be disposed on a surface facing a surface on which the light-emitting unit 210 is disposed.

An operation of the light quantity correction function using the control unit 100 that controls the second light-receiving unit 230 and the third light-receiving unit 240 will be described below.

In the case of a warm-up operation in which power is applied to the measurement device and the driving of the measurement device starts, when the measurement device is not used for a preset period of time after the power of the measurement device is turned on and the measurement device enters a power saving mode, the light quantity correction function may be performed in the case of correction by a selection of a user who uses the measurement device.

For example, when power is applied to the measurement device, a warm-up operation of checking state values of internal sensors to determine whether a normal operation of the measurement device is possible is performed. In the last process of the warm-up operation, the light-emitting unit 210 may emit light, and an automatic light quantity correction function may be performed based on the values detected by the second light-receiving unit 230 and the third light-receiving unit 240.

The quantity of light to be measured by the second light-receiving unit 230 and the third light-receiving unit 240 according to the light emission of the light-emitting unit 210 in a state in which the cartridge 250 is not inserted for light quantity correction is stored in the control unit 100 as reference values. These reference values and threshold values for reference values to be described below may be separately stored for each of the second light-receiving unit 230 and the third light-receiving unit 240, and in some embodiments, the reference values may be the same as the threshold values.

The control unit 100 may compare detection values detected by the second light-receiving unit 230 and the third light-receiving unit 240 with the respective reference values to determine whether the system is normal or whether an error has occurred, and perform light quantity correction.

When each of the detection values detected by the second light-receiving unit 230 and the third light-receiving unit 240 is less than or equal to the threshold value for the reference value, the control unit 100 may determine that there is no change in quantity of light (i.e., determine that there is no problem) and terminate the light quantity correction process (i.e., proceed to a measurement standby state).

When a change in the detection value by the threshold value or more compared to the reference value is detected by at least one of the second light-receiving unit 230 and the third light-receiving unit 240, and a rate of change of the detection value detected by the second light-receiving unit 230 compared to the reference value is different from a rate of change of the detection value detected by the third light-receiving unit 240 compared to the reference value, it means that contamination of the light-receiving units 230 and 240 for light quantity correction or a change in characteristic values has occurred, and thus the control unit 100 may determine that an error has occurred and terminate the light quantity correction process. In this case, the control unit 100 may display the error on a display (not illustrated) or the like of the measurement device.

When a change in the detection value by a threshold value or more compared to the reference value is detected by both the second light-receiving unit 230 and the third light-receiving unit 240 and a rate of the change of the detection value detected by the second light-receiving unit 230 compared to the reference value is the same as a rate of the change of the detection value detected by the third light-receiving unit 240 compared to the reference value, it means that a change in quantity of light emitted from the light-emitting element itself has occurred, and thus the control unit 100 may perform light quantity correction by controlling the light-emitting unit 210.

When it is detected that the quantity of light has increased, the control unit 100 may reduce the quantity of light of the light-emitting unit 210 in consideration of the increased value, and when it is detected that the quantity of light has reduced, the control unit 100 may increase the quantity of light of the light-emitting unit 210 in consideration of the reduced value. For such light quantity correction, a variable resistor or the like may be provided in the light-emitting unit 210.

Meanwhile, the quantity of light detected by the second light-receiving unit 230 and the third light-receiving unit 240 may be separately recorded in the control unit 100 for later confirmation.

Through the above method, it is possible to automatically check and correct the quantity of light emitted from the light-emitting element even without using a check cartridge, and even when the quantity of light is changed according to the use of the light-emitting element, the change may be checked to perform the light quantity correction.

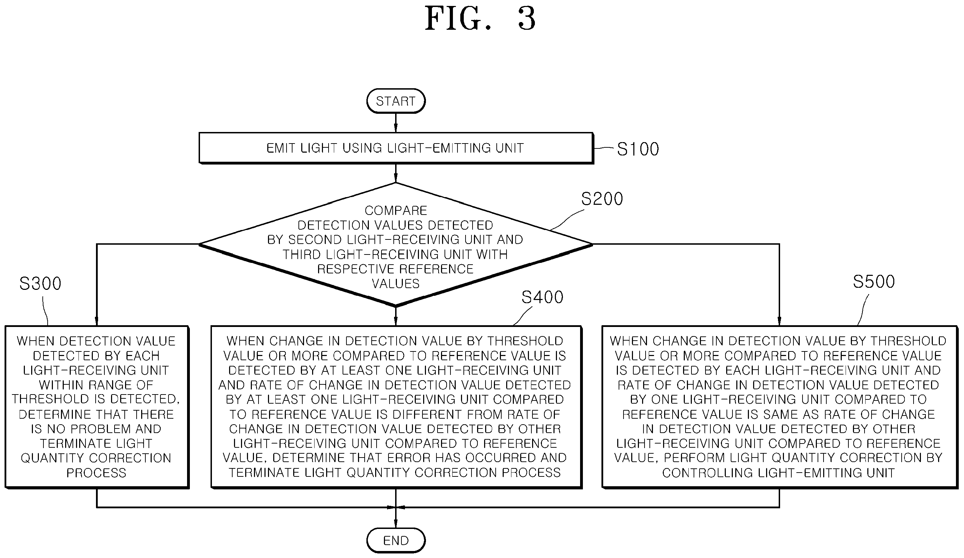

FIG 3 is a flowchart for describing a light quantity correction method of a measurement device according to an embodiment of the present invention. The light quantity correction method according to the embodiment of the present invention will be described below with reference to FIG 3.

As illustrated in FIG 3, when a light quantity correction function is performed, a control unit 100 emits light using a light-emitting unit 210 (S100), compares detection values detected by a second light-receiving unit 230 and a third light-receiving unit 240 with respective reference values (S200), determines whether the system is normal or whether an error has occurred, and performs light quantity correction.

When the detection value detected by each of the second light-receiving unit 230 and the third light-receiving unit 240 is less than or equal to a threshold value for the reference value, the control unit 100 determines that there is no problem and terminates the light quantity correction process (S300).

When a change in the detection value by the threshold value or more compared to the reference value is detected by at least one of the second light-receiving unit 230 and the third light-receiving unit 240 and a rate of change of the detection value detected by the second light-receiving unit 230 compared to the reference value is different from a rate of change of the detection value detected by the third light-receiving unit 240 compared to the reference value, the control unit 100 determines that an error has occurred and terminates the light quantity correction process (S400).

When a change in the detection value by a threshold value or more compared to the reference value is detected by both the second light-receiving unit 230 and the third light-receiving unit 240 and a rate of change of the detection value detected by the second light-receiving unit 230 compared to the reference value is the same as a rate of change of the detection value detected by the third light-receiving unit 240 compared to the reference value, the control unit 100 performs the light quantity correction by controlling the light-emitting unit 210 (S500).

Meanwhile, in the progress of the light quantity correction process, a threshold period of time may be set, and when the light quantity correction process is not terminated within the threshold period of time, the control unit 100 may be configured to determine that an error has occurred and terminate the process.

In some embodiments, the control unit 100 may include a processor, a memory connected to the processor, and the like, and instructions for causing the processor to perform each operation of the light quantity correction method according to the present invention may be stored in the memory.

According to the measurement device with the light quantity correction function and the light quantity correction method thereof according to the present invention, by providing two light-receiving units that directly receive light from a light-emitting unit and performing the light quantity correction function, it is possible to automatically check and correct the quantity of light emitted from the light-emitting element even without using a check cartridge.

Accordingly, in the present invention, periodically, in a process of a user installing a check cartridge, it is possible to reduce unnecessary maintenance and management problems, such as the possibility of errors due to incorrect insertion during installation, and a need to safely and cleanly manage the check cartridge to protect the check cartridge from contamination or scratches, and by removing the possibility of error, it is possible to improve usability and improve the accuracy of the measurement device.

Further, according to the present invention, by eliminating the consumption of the check cartridge, it is possible to implement a unit price reduction in production and packaging costs so that it is possible to provide an improvement that is distinguished from the conventional technology in terms of economy.

While the present invention has been described with reference to embodiments illustrated in the accompanying drawings, the embodiments should be considered in a descriptive sense only, and it should be understood by those skilled in the art that various alterations and equivalent other embodiments may be made. Therefore, the scope of the present invention should be defined only by the following claims.

## Claims

1. A measurement device with a light quantity correction function, which is a measurement device into which a cartridge is inserted and which measures an analyte of a sample on the basis of optical reaction characteristic information about the sample in the cartridge, the measurement device comprising:
a light-emitting unit configured to emit light;
a first light-receiving unit configured to receive light according to a reaction of the light emitted by the light-emitting unit with respect to the sample;
a second light-receiving unit and a third light-receiving unit disposed to receive the light emitted by the light-emitting unit even when the cartridge is not inserted; and
a control unit configured to, when a light quantity correction function is performed, control the light-emitting unit to emit light, and perform the light quantity correction function by comparing a detection value detected by each of the second light-receiving unit and the third light-receiving unit with a pre-stored reference value.

2. The measurement device of claim 1, wherein the second light-receiving unit and the third light-receiving unit are disposed on a surface facing a surface on which the light-emitting unit is disposed.

3. The measurement device of claim 1 or 2, wherein the light-emitting unit and the first light-receiving unit are disposed to be coplanar.

4. The measurement device of any of the preceding claims, wherein, when the detection value detected by each of the second light-receiving unit and the third light-receiving unit is less than or equal to a threshold value for the reference value, the control unit determines that there is no problem and terminates the light quantity correction process.

5. The measurement device of any of the preceding claims, wherein, when a change in the detection value by a threshold value or more compared to the reference value is detected by at least one of the second light-receiving unit and the third light-receiving unit and a rate of change in the detection value detected by the second light-receiving unit compared to the reference value is different from a rate of change in the detection value detected by the third light-receiving unit compared to the reference value, the control unit determines that an error has occurred and terminates the light quantity correction process.

6. The measurement device of any of the preceding claims, wherein, when a change in the detection value by a threshold value or more compared to the reference value is detected by both the second light-receiving unit and the third light-receiving unit and a rate of change in the detection value detected by the second light-receiving unit compared to the reference value is the same as a rate of change in the detection value detected by the third light-receiving unit compared to the reference value, the control unit performs light quantity correction by controlling the light-emitting unit.

7. The measurement device of any of the preceding claims, wherein the reference value and the threshold value for the reference value are set separately for each of the second light-receiving unit and the third light-receiving unit.

8. The measurement device of any of the preceding claims, wherein the light-emitting unit includes a light-emitting diode, and
each of the first light-receiving unit, the second light-receiving unit, and the third light-receiving unit includes a photodiode.

9. A light quantity correction method of a measurement device, comprising operations of
controlling, by a control unit, a light-emitting unit to emit light;
comparing, by the control unit, a detection value detected by each of at least two light-receiving units with a pre-stored reference value; and
performing, by the control unit, one operation among normal determination, error determination, and light quantity correction function performance according to a result of the comparing.

10. The light quantity correction method of claim 9, wherein, in the performing of one of the operations, when the detection value detected by each of the at least two light-receiving units is less than or equal to a threshold value for the reference value, the control unit determines that there is no problem.

11. The light quantity correction method of claim 9 or 10, wherein, in the performing of one of the operations, when a change in the detection value by a threshold value or more compared to the reference value is detected by at least one of the at least two light-receiving units and a rate of change in the detection value detected by one of the at least two light-receiving units compared to the reference value is different from a rate of change in the detection value detected by the other of the at least two light-receiving units compared to the reference value, the control unit determines that an error has occurred.

12. The light quantity correction method any of claims 9 to 11, wherein, in the performing of one of the operations, when a change in the detection value by a threshold value or more compared to the reference value is detected by both of the at least two light-receiving units and a rate of change in the detection value detected by one of the at least two light-receiving units compared to the reference value is the same as a rate of change in the detection value detected by the other of the at least two light-receiving units compared to the reference value, the control unit performs light quantity correction by controlling the light-emitting unit.

13. The light quantity correction method any of claims 9 to 12, wherein the reference value and the threshold value for the reference value are set separately for each of the at least two light-receiving units.
